# FASCICULE DE BREVET EUROPEEN

(11) **EP 0 577 502 B1**
(45) Date de publication et mention de la délivrance du brevet: **05.03.1997**
(21) Numéro de dépôt: 93401678.3
(22) Date de dépôt: 29.06.1993
(51) Int. Cl.: H01H 13/20, B60H 1/00, B60K 37/06, G05G 1/02, H01H 13/50

(54) **Tableau de commande à touches, en particulier pour la commande d'une installation de climatisation de l'habitacle d'un véhicule automobile**
Bedienungstafel mit Berührungstasten für die Regelung einer Klimatisiereinrichtung eines Fahrzeuginnenraums
Control panel with tip keys, specifically for the control of an air-conditioning installation in the passenger compartment of a motor car

(30) Priorité: 01.07.1992 FR 9208106
(43) Date de publication de la demande: 05.01.1994
(73) Titulaire: VALEO ELECTRONIQUE, 94000 Creteil (FR)
(72) Inventeur: Baratay, Hervé, F-77400 Lagny (FR)
(74) Mandataire: Gamonal, Didier

(56) Documents cités:
- EP-A- 0 196 633
- DE-A- 2 540 945
- DE-A- 3 320 438
- DE-U- 8 611 125
- DE-U- 9 014 941
- FR-A- 2 430 658
- GB-A- 2 201 038

## Description

La présente invention concerne un tableau de commande à touches, en particulier pour la commande d'une installation de climatisation de l'habitacle d'un véhicule automobile, comprenant un boîtier clavier, des boutons guidés par ledit boîtier en étant déplaçables entre deux positions, l'une stable de repos, l'autre de travail et des commutateurs actionnés par les boutons pour la commande de fonctions prédéterminées.

Un tel tableau est décrit dans le document FR-A-2 538 467. Dans ce document, les éléments de commutation sont principalement du type fluidique.

On peut envisager d'utiliser des claviers dans lesquels les éléments de commutation associés aux touches sont du type électrique à déclic à faible course.

Jusqu'à ce jour, il était difficile d'employer de tels commutateurs électriques. En effet ceux-ci sont à faible course, ce qui est incompatible avec un clavier à touches requérant une plus grande course pour l'enfoncement des boutons et la commande en toute certitude des fonctions de l'installation.

Pour pallier cet inconvenient, on peut songer à faire appel à une solution du type de celle décrite dans le document DE-U 9 014 941, selon le préambule de la revendication 1, à faible course associés au bouton. Ces boutons sont en deux parties à savoir une touche agissant sur un ressort solidaire d'une tige guidée et épaulée. Il en résulte qu'il faut respecter des tolérances de fabrication précises pour éviter que la tige n'endommage le commutateur, que la fabrication de la tige n'est pas aisée et que son élasticité n'est pas aussi faible que désiré en vue d'une commande douce. Des coincements sont également à craindre.

La présente invention a pour objet de pallier ces inconvénients et de créer, de manière simple et économique, un nouveau tableau de commande doté de commutateurs électriques à déclic de faible course, tout en ayant une course d'enfoncement suffisante des boutons.

Ce problème est résolu, selon l'invention, par la partie caractérisante de la revendication 1.

Grâce à l'invention, les éléments en matière élastique forment des entretoises et l'on peut utiliser des commutateurs économiques à faible course et de faible encombrement axial, puisque la course du bouton est rallongée par les éléments en matière élastique. Ces éléments élastiques favorisent la réduction des bruits et sont avantageusement montés sous précontrainte en étant portés par l'extrémité libre de la tige des boutons monoblocs, en sorte que les jeux sont rattrapés, que les boutons sont plaqués contre leurs épaulements associés, et que le montage du bouton est simplifié.

En outre, la commande est plus douce, grâce notamment à l'élément en matière élastique, les frottements sont réduits, ainsi que les risques de coincement, la fabrication du bouton monobloc avec sa tige est simplifiée et les tolérances de fabrication à respecter sont moins précises. Les usures du bouton sont réduites du fait que ce bouton est monobloc.

Avantageusement, pour ce faire, les boutons comportent une tige avec un épaulement et les éléments élastiques sont montés chacun sous précontrainte entre ledit épaulement et ledit commutateur électrique concerné, avec un jeu entre l'extrémité libre des tiges et les éléments élastiques.

On obtient ainsi une commande plus douce, avec une bonne sensation tactile, moins bruyante avec un boîtier clavier de faible encombrement axial.

Certes, il est connu par le document DE-U 8 611 125 d'associer un élément élastique au bouton, mais celui-ci consiste en un ressort à boudin monté à jeu sur une tige n'agissant pas directement sur le commutateur. Un mouvement relatif se produit entre la tige du bouton et le ressort à boudin en sorte que la solution est plus bruyante et que la commande est moins douce du fait de possibles frottements entre la tige et le ressort à boudin. Le montage du bouton est plus compliqué et son éclairage est plus difficile. En outre, il faut respecter des côtés précises pour éviter toute interférence entre le bouton et son commutateur associé. Grâce à l'invention les tolérances de fabrication à respecter sont moins précises.

Dans le documents FR-A-2 430 658 le commutateur associé est également à faible course, mais le montage est encore plus compliqué, puisque le bouton loge un ressort à boudin, agissant sur un poussoir traversant une plaque en acier. Les problèmes de bruits et de frottements se posent également. En outre, l'éclairage du bouton est rendu difficile.

On apprécièra que, les éléments en matière élastique selon l'invention permettent un guidage moins précis du bouton avec des jeux dans les guidages. Un léger décentrage du bouton, par rapport aux commutateurs électriques, est également possible grâce à ces éléments.

Suivant une autre caractéristique, les éléments en matière élastique sont enfilés sur l'extrémité en forme de téton, que présentent des tiges, dont sont dotés lesdits boutons. Ledites tiges traversent avantageusement un conduit de lumière en étant guidées par celui-ci.

Ainsi il est possible d'éclairer aisément les boutons, ainsi que des zones d'affichage à l'aide d'un nombre restreint de lampes montées à l'intérieur du boîtier, tout en ayant un excellent guidage des boutons.

En outre l'enfilage des éléments élastiques sur leurs boutons associés permet de bien maîtriser la déformation desdits éléments.

Bien entendu la précontrainte des éléments élastiques doit être telle, qu'elle ne provoque pas une commutation des commutateurs électriques.

Avantageusement tous ces commutateurs sont portés par une carte portant des pistes électriques d'alimentation et permettant d'alimenter des afficheurs par l'intermédiaire d'éléments en matériau caoutchouc électriquement conducteur.

Les commutateurs à déclic peuvent comporter une cloqueuse posée directement sur un circuit imprimé porté par ladite carte, mais avantageusement ces commutateurs sont des commutateurs du commerce. On obtient ainsi une meilleure fiabilité, car ces composants rapportés sur la carte sont testés par avance et garantis. En outre, ils peuvent être totalement étanches aux poussières et à l'eau et leur montage peut se faire de manière automatique, notamment par soudage.

Généralement ces composants du commerce comportent un boîtier plastifié isolant et leur encombrement sur la carte est réduit. Ces composants ont une course allongée par rapport à une cloqueuse fixée directement sur la carte et permettent une meilleure élimination des jeux et vibrations. Enfin on évite un traitement particulier de la carte, par exemple un dépôt d'or ou de carbone, lesdits composants comportant usuellement une cage que l'on peut rapporter aisément par soudage.

Cette carte permet un assemblage aisé des divers composants du boîtier clavier ainsi que leur alimentation électrique.

La description qui va suivre illustre l'invention en regard des dessins annexés dans lesquels :
- la figure 1 est une vue de face du tableau de commande selon l'invention ;
- la figure 2 est une vue en coupe selon la ligne 2-2 de la figure 1 ;
- la figure 3 est une vue en coupe selon la ligne 3-3 de la figure 1 ;
- la figure 4 est une vue en coupe selon la ligne 4-4 de la figure 3 ;
- la figure 5 est une demi-vue du masque du tableau de commande ;
- la figure 6 est une vue de dessus d'un des boutons du tableau de commande ;
- la figure 7 est une vue en coupe selon la ligne 7-7 de la figure 11 ;
- les figures 8 et 9 sont des vues en coupe respectivement selon les lignes 8-8 et 9-9 de la figure 7 ;
- la figure 10 est une vue en coupe d'un élément élastique selon l'invention ;
- la figure 11 est une vue en coupe selon la ligne 11-11 de la figure 10 ;
- la figure 12 est une vue de dessous de l'élément élastique selon la figure 11 ;
- les figures 13 et 14 sont des vues en coupe montrant le bouton pour respectivement sa position de repos et sa position de travail ;
- la figure 15 est une vue partielle analogue à la figure 4 pour un second exemple de réalisation ;
- la figure 16 est une vue montrant la membrane élastique selon la figure 14 ;
- la figure 17 est une vue schématique montrant l'un des interrupteurs du tableau de commande.

Dans les figures est illustré un tableau de commande d'une installation de climatisation monté dans l'habitacle d'un véhicule automobile. Ce tableau de commande est ici du type clavier à touches. A chaque touche, ici des boutons 3 enfichables, correspond une fonction déterminée de l'installation pour notamment le chauffage de l'habitacle, le dégivrage du pare-brise, le conditionnement d'air, la programmation de la climatisation, le fonctionnement économique (arrêt du compresseur).

A chaque bouton 3 est associé un commutateur électrique 50. Les boutons 3 sont guidés par un boîtier clavier 2 en étant déplacables entre deux positions, l'une stable de repos, l'autre instable de travail.

Ce tableau comporte des pièces en matière électriquement isolante, ici en matière plastique, à savoir : une façade 1, un boîtier clavier 2, quatorze boutons enfichables, deux vitres 5, un masque 6, un conduit de lumière 7, un boîtier-carte 8.

La réalisation en matière plastique de ces pièces permet notamment, de manière connue en soi, un assemblage par clipsage des boîtiers 2 et 8, ainsi qu'un montage par clipsage de le façade 1 sur le boîtier 2 et une réalisation aisée par moulage de nervures 62.

Les pièces 1,2,3,6,8 sont en matériau opaque, tandis que la vitre 5 et le conduit de lumière 7 sont respectivement transparents et en matériau conducteur de lumière. Ici la vitre 5 est en méthacrylate cristal, le conduit 7 à base de polycarbonate, et le masque 6 consiste en un film de polyester.

Le tableau de commande est destiné à être monté à l'intérieur de l'habitacle du véhicule, dans une paroi de celui-ci, ici la console 100 associée au tableau de bord du véhicule. Cette console est ajourée et permet également le montage d'un auto-radio.

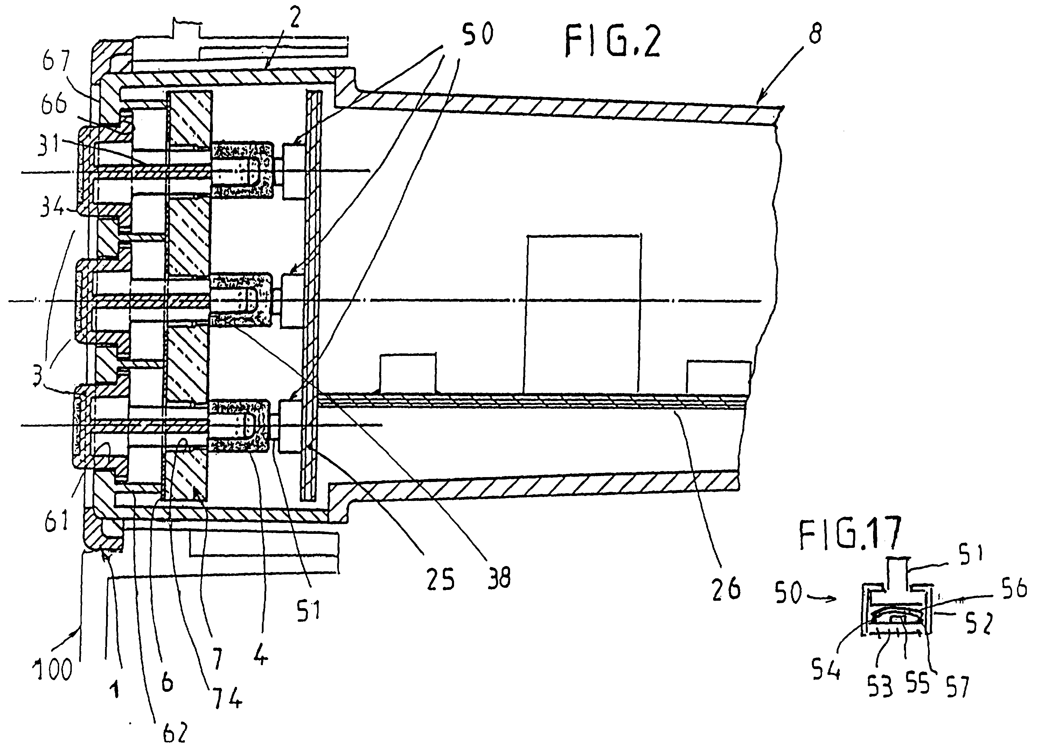

Le montage du tableau de commande s'effectue par la face arrière de la console 100 (figure 2). A cet effet, le boîtier clavier 2, de forme rectangulaire, tout comme le boîtier 8, présente des oreilles de fixation.

Chaque oreille est propre à coopérer de manière complémentaire avec un canon, que présente le boîtier-carte 8 en saillie axiale. Les canons et les oreilles complémentaires sont filetés pour le montage de quatre vis de fixation du tableau à la console 100.

Pour formation d'un ensemble manipulable et transportable avant montage sur la console, les boîtiers 2 et 8 sont assemblés, de manière connue en soi, par clichage. Pour cela, le boîtier 1 présente sur chacune de ses faces latérales un cran, tandis que le boîtier 8 présente latéralement en correspondance avec chaque cran une patte élastique à crochets pour venir s'encliqueter sur le cran. Ce boîtier 8 coiffe en partie la face arrière du boîtier 2.

Une sonde de température 24 est également prévue. Cette sonde permet de donner une information au circuit électronique (à un comparateur) permettant une automatisation de la climatisation en fonction de la température désirée et affichée.

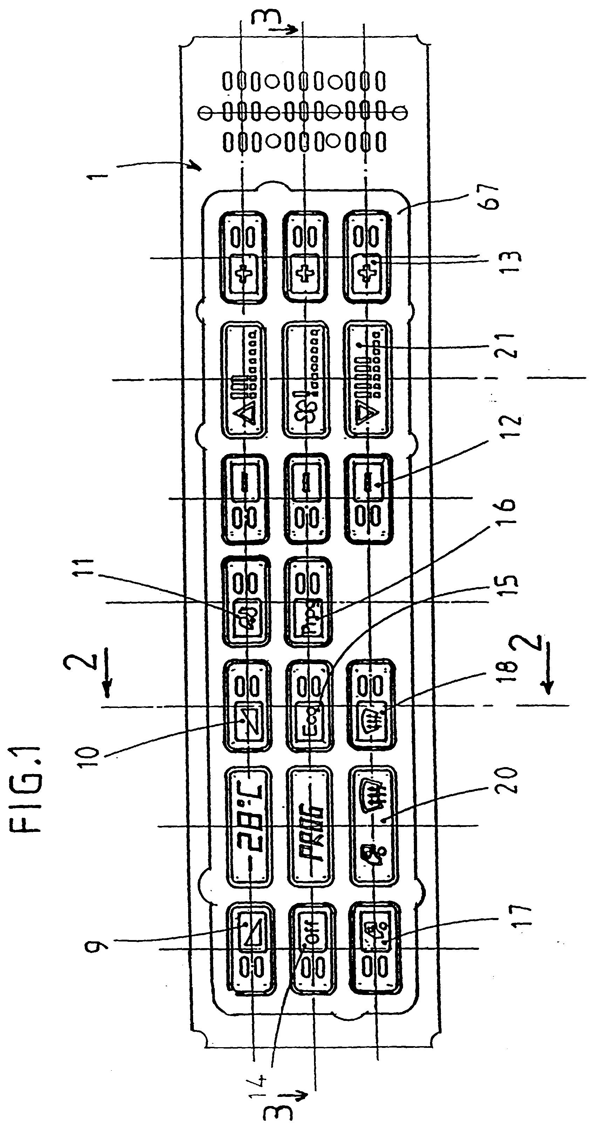

La façade 1 présente en regard de la sonde 24 plusieurs ouvertures de forme oblongue (voir partie droite de la figure 1). La façade 1 est rapportée en final par clichage sur le boîtier 2 après montage des boîtiers 2 et 8 sur la console 100 à l'aide des vis.

A cet effet, la façade 1 vient coiffer la face avant du boîtier 2 et présente sur chacune de ses faces latérales des pattes à crochets, d'orientation axiale, venant se crocheter sur des crans complémentaires, que présente sur chacune de ses faces latérales le boîtier 2.

Le boîtier-carte 8 porte une carte 26 en matière isolante. Cette carte supporte des composants électriques et électroniques notamment le susmentionné comparateur, ainsi que des pistes électriques pour la commande de l'installation de climatisation. De manière analogue, le boîtier 2 porte une carte 25 en matière électriquement isolante. La carte 25 s'étend perpendiculairement à la carte 26 et porte des pistes électriques ainsi qu'un connecteur 29 pour sa liaison électrique avec la carte 26 alimentée électriquement par la batterie du véhicule automobile via le réseau de bord du véhicule, grâce à des connecteurs portés par la face arrière du boîtier 8.

Ainsi la carte 25 permet l'alimentation électrique des divers composants du boîtier 2 et constitue une carte d'assemblage pour ces composants.

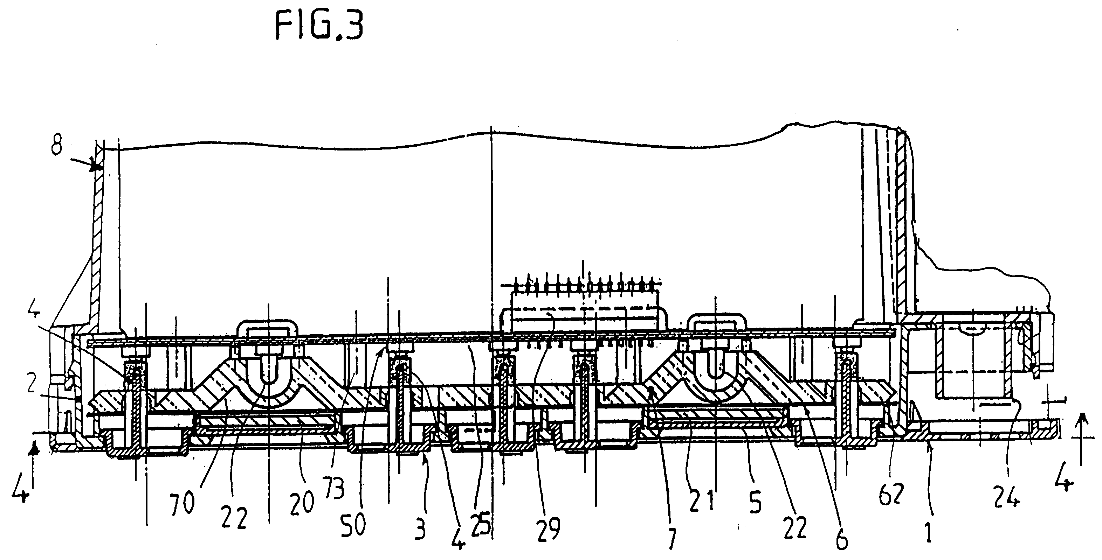

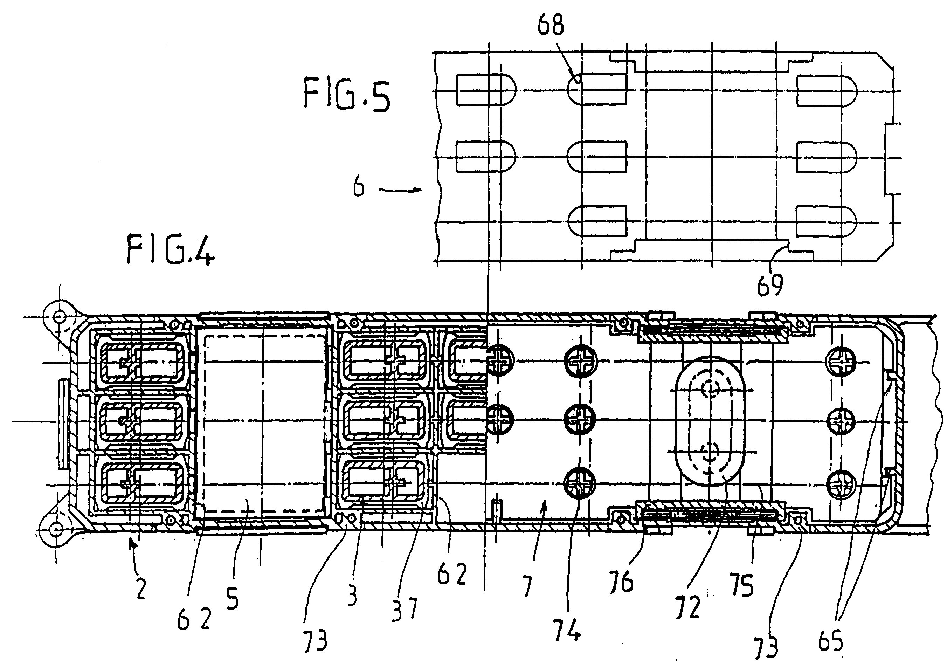

Ici le boîtier 2 à sa face arrière fermée par la carte 25 et présente à cet effet (figures 3 et 4) huit surépaisseurs 73, à savoir quatre par faces longitudinales. Ces surépaisseurs 73 s'étendent de la face avant jusqu'à la face arrière du boîtier 2 pour offrir des appuis à la carte 25 et permettre la fixation de la carte 25 sur le boîtier 2 à l'aide de vis autotaraudeuse, une par surréalisme, traversant la carte 25 pour venir se visser dans les surréalismes 73.

La liaison par vis est donc démontable. Bien entendu, on peut prévoir d'autres types de fixation, par exemple par rivetage ou en variante par boulonnage.

Le boîtier 2 présente un réseau de nervures quadrangulaires 62 (figure 4) s'étendant axialement, à compter de la paroi avant 67 du boîtier 2, en direction de la face arrière duit boîtier et permettant un guidage des boutons 3 mobiles en translation. Ces nervures 62 offrent à leur extrémité libre un appui au masque 6 et au conduit 7 décalés ainsi par rapport à la paroi avant 67 du boîtier 2. Le masque 6 est ici de couleur noire et présente (figure 5) des ouvertures oblongue 68 associées à chacun des boutons 3 pour permettre l'éclairage de ceux-ci.

Latéralement le boîtier 2 présente deux nervures 65 par faces latérales pour montage par enfilage axial du masque 6, du conduit 8 et de la carte 7, ledites pièces présentant pour ce faire chacune latéralement une encoche (figure 4) pour coopération des bords destitués encoches avec les deux nervures 65 associées. Ces nervures 65 s'étendent axialement de la face arrière à la face avant du boîtier.

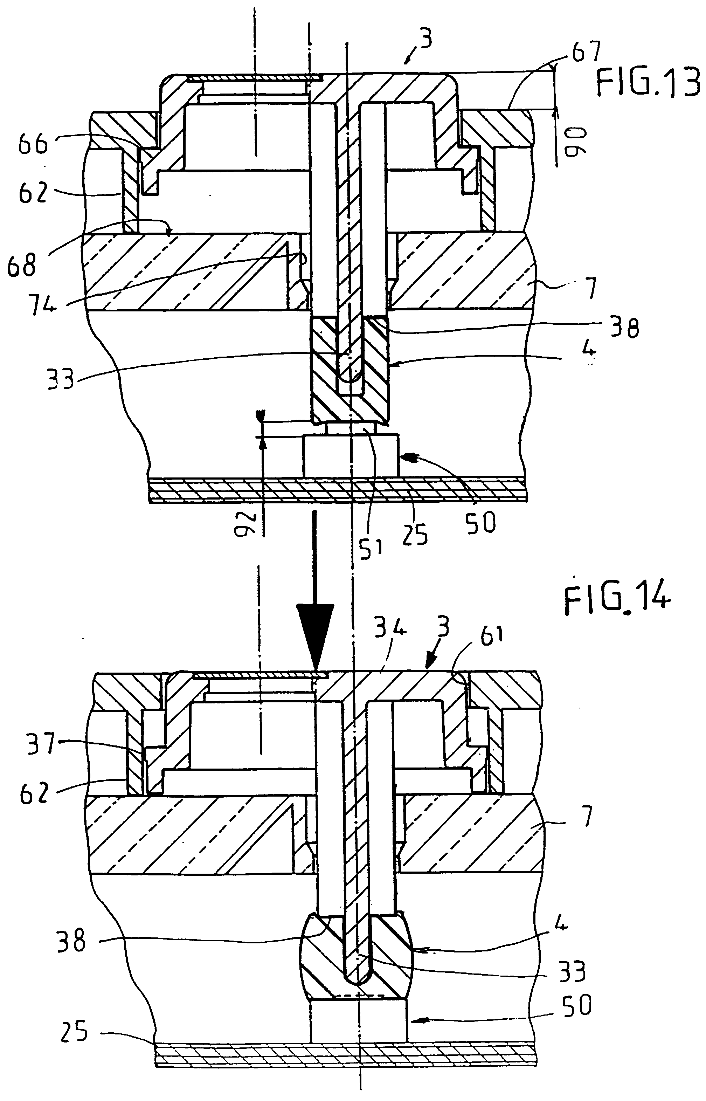

Les boutons 3 sont déplaçables axialement entre deux positions, l'une stable de repos (figure 13), et l'autre instable de travail (figure 14), c'est-à-dire que le bouton 3 revient automatiquement en position de repos lorsque l'usager cesse son action d'enfoncement sur le bouton concerné. Les boutons 3 permettent d'actionner des commutateurs 50 pour la commande des fonctions prédéterminées de l'installation de climatisation. A chaque bouton correspond un commutateur 50, ici du type électrique à déclic et à faible course et, suivant l'invention, pour rallongement de la course des boutons, des éléments en matière élastique 4 tels que de l'élastomère, ici de l'élastomère injectable, sont interposés axialement chacun entre un bouton et un commutateur électrique 50, lesdits blocs 4 sollicitant constamment les boutons vers un épaulement 66 solidaire de la face avant du boîtier 2. Selon l'invention, les éléments 4 sont montés entre la tige 31 du bouton et le commutateur 50 de manière décrite ci-après.

Ici les commutateurs 50 sont des commutateurs électriques à faible course et à déclic que l'on trouve couramment dans le commerce et les éléments en matière élastique 4 sont en forme de blocs parallélépipèdiques et forment un équipage mobile avec les boutons 3. Ces blocs viennent coiffer l'extrémité libre du bouton 3 à la manière d'une tétine et sont implantés axialement entre le conduit 7 et la carte 25.

Chaque bouton comporte une tête 34 de forme creuse et une tige 31 d'un seul tenant avec ladite tête. Cette tête 34 a globalement un contour rectangulaire (figure 6) avec un fond à partir duquel s'érige la tige 31 d'orientation axiale. Ce fond est délimité par une paroi périphérique d'orientation axiale ou jupe, dont l'extrémité libre se termine par un rebord 32 formant un épaulement. C'est ce rebord 32 qui est destiné à venir en contact avec des épaulements 66 de la paroi avant 67 du boîtier 2 (figure 2). Cette paroi 67 est dotée d'ouvertures 61 pour le passage des têtes 34 des boutons, et forme par sa face arrière les épaulements 66 délimités par les ouvertures 61 et les nervures 62.

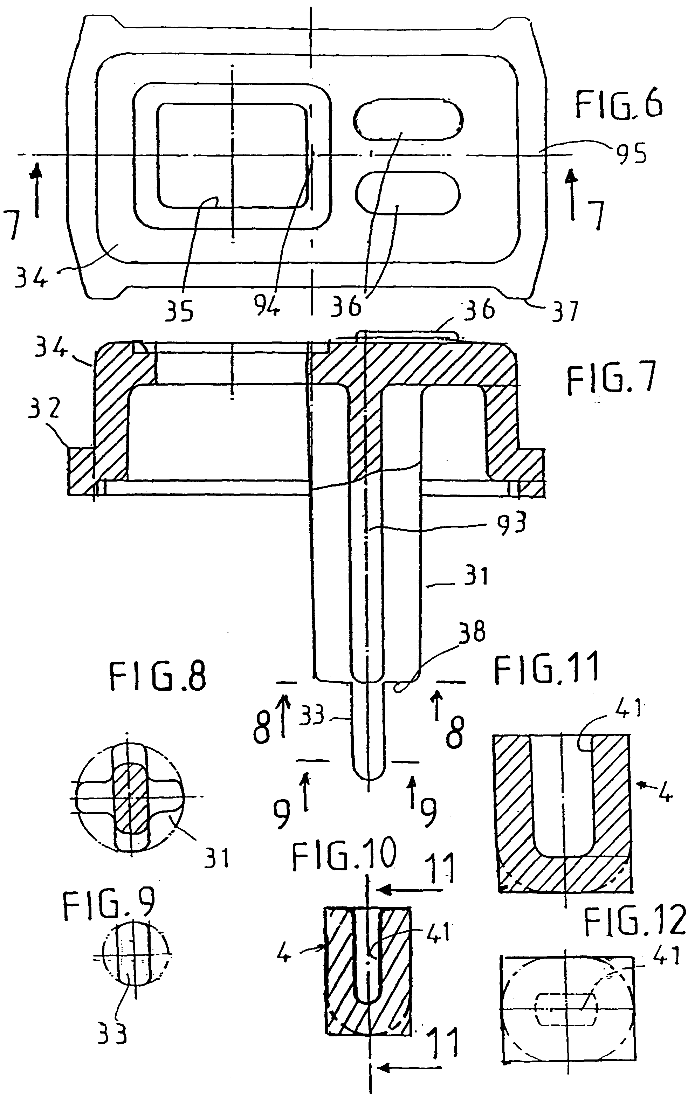

La tige 31 porte suivant l'invention, l'élément 4 et présente un épaulement 38 à cet effet. La tige peut être cylindrique avec un changement de diamètre au voisinage de son extrémité libre de plus petit diamètre pour formation de l'épaulement 38. Ici pour des raisons d'économie de matière et des facilités de démoulage, la tige 31 dans sa partie courante ou principale a en section (figure 8) une forme de croix et se termine par une extrémité libre 33 de taille réduite en forme de téton délimitée par deux méplats et deux portions circulaires (figure 9). Le téton 33 a une forme complémentaire au trou 41, que présente l'élément 4 ici en élastomère à base de néoprène. L'élément 4 vient donc coiffer le téton 33, de préférence à léger serrage en étant immobilisé en rotation par coopération de formes avec celui-ci. En variante, l'élément 4 peut être en caoutchouc et présenter un fond arrondi (voir pointillés figures 10 à 12).

Le trou 41 de forme oblongue, est borgne, et l'élément 4 vient buter contre l'extrémité terminale de la partie en croix de la tige 31 formant pour celui-ci l'épaulement 38. Le fond de l'élément 4 prend appui sur un poussoir 51 du commutateur électrique 50 décrit ci-après.

Comme mieux visible à la figure 13, dans la position de repos (rebord 32 au contact de l'épaulement 66), un jeu existe axialement entre le fond du trou 41 et le téton 33.

L'élément 4 est monté, selon l'invention, sous précontrainte, représenté par la distance, entre le poussoir 51 et l'épaulement 38. Lors de l'actionnement du bouton (figures 13 à 14), celui-ci effectue une course 90 et le poussoir une course 92 et l'élément 4 se déforme pour prendre globalement en final une forme en tonneau.

Ainsi qu'on l'aura compris, l'épaisseur du fond de l'élément 4 dépend des applications et c'est le jeu, entre le téton 33 et le fond du trou 41, qui permet de rallonger la course du bouton 3 et de donner la précontrainte à l'élément 4.

L'épaulement 38 et le montage par enfilage de l'élément 4 sur le téton 33 permettent de bien maîtriser la déformation de l'élément 4, monté à serrage sur le téton 33, ainsi que la précontrainte de l'élément 4.

On notera que l'élément 4, faisant office de ressort, sollicite le bouton 3 vers sa position de repos pour laquelle le rebord 32 est en contact avec l'épaulement 66 (la face arrière de la paroi 67).

Bien entendu la précontrainte est inférieure à la charge exercée par l'élément cloqueur 56, que présente le commutateur 50 sur le poussoir 51. On obtient ainsi un actionnement plus doux du bouton 3, qui est automatiquement rappelé en position de repos, lorsque l'on cesse d'exercer une action sur ledit bouton.

On obtient une bonne qualité tactile et un bon lissage de la courbe effort - déplacement du bouton, sans butées agressives. En outre, les frottements sont minimisés.

La tête 34 présente deux protubérances 36 pour action du conducteur sur ledit bouton ainsi qu'une fenêtre 35.

Le rebord 32 présente à ses quatre coins des probutérances effilées 37 (figure 6). Ces protubérances forment en quelque sorte des patins admis à venir localement en contact avec les nervures 62 (figure 4), ainsi les risques de coincement des boutons sont minimisés du fait que les protubérances 37 ont une forme dégageante.

La fenêtre 35 sert au montage d'une vignette et on notera que la tige 31 s'étend de manière décalée (figure 7) par rapport à l'axe de symétrie axial du bouton 3. Ce décalage permet la création d'une fenêtre 35 de grande dimension, ainsi qu'un bon éclairage du bouton 3 à partir du conduit de lumière 7.

L'axe de la tige ou axe d'actionnement 93 est décalé par rapport à l'axe axial de symétrie passant par le point d'intersection 94 des axes de symétrie longitudinal et vertical du bouton 3 (figure 6). Cet axe 93 intercepte l'axe de symétrie longitudinal 95 du bouton 3.

C'est pour cette raison que les trous 68 du masque 6 ont une forme oblongue pour pouvoir bien éclairer la fenêtre 35, et que le conduit ou guide de lumière 7 présente des passages 74 pour le guidage des boutons 3, lesdits trous 68 étant disposés en regard des fenêtres 35.

Ainsi malgré le décalage de l'axe 93, on obtient un excellent guidage du bouton, les protubérances 37 évitant un basculement de celui-ci en coopération avec le passage 74, le conduit 7 ayant également une fonction de guidage.

On notera pour ce faire que le passage 74 (figure 6) est étagé et présente une partie basse de diamètre réduit et une partie haute de plus grand diamètre. Ainsi la tige 31 du bouton 3 peut venir en contact que localement avec le passage 74, en sorte de réduire les frottements et d'éviter tout coincement.

En pratique, la tige 31 traverse à jeu le passage 74. Ceci est permis grâce à l'élément 4 qui permet un guidage moins précis du bouton. L'élément 4 permet également un léger décentrage entre la tige 31 et le commutateur 50.

Ce conduit 7 n'a pas à servir d'appui aux éléments 4 implantés axialement entre la carte 25 et la face du conduit 7 tournée vers la carte 25.

Les boutons 3 sont disposés de manière parallèle par rapport à la façade 1 et le tableau comprend une première rangée verticale de boutons à vignettes 9,14,17, une zone d'affichage 20, une deuxième rangée verticale de boutons à vignettes 10,15,18, une troisième rangée verticale médiane de deux boutons à vignettes 11,16, puis une quatrième rangée de boutons à vignettes 12, une deuxième zone d'affichage 21 et une cinquième rangée de boutons à vignettes 13.

Les zones d'affichage 20,21 sont éclairées par le conduit 7 avec un nombre réduit de lampes, à savoir deux lampes par zones 20,21.

Ces vignettes sont à base de polycarbonate et permettent l'éclairage du bouton correspondant ainsi que le repérage de la fonction duit bouton.

L'installation de climatisation étant connue en soi ne sera pas décrite plus en détail, néanmoins on notera que les zones d'affichage 20 et 21 sont à l'image l'une de l'autre et comportent chacune trois portions d'affichage associées chacune à deux boutons de commande disposés de part et d'autre de ladite portion.

Ici le tableau de commande est du type à commande impulsionnelle, l'enfoncement d'un bouton actionnant le commutateur 50 à déclic correspondant. ce commutateur 50 est ici un interrupteur étanche du commerce du type à déclic et comporte un poussoir en matière élastomère 51 monté mobile à l'intérieur d'une cage électriquement conductrice 52 à section en forme de U, dont la base est trouée pour le passage du poussoir 51 à section en forme de T. Cette cage est fermée par une plaque en matériau électriquement isolant 53 portant des contacts 54,57,55.

Un élément 56 en forme de disque s'appuie sur les contacts 54 et 57. Cet élément 56 est reçu dans une cavité de l'élément isolant 53 en forme de boîtier en sorte qu'il referme de manière étanche ladite plaque 53 en protégeant les contacts 54,57,55. L'élément 56 est en forme de cloqueuse, c'est-à-dire qu'il est propre à prendre deux configurations, à savoir une première configuration stable de repos pour laquelle il a une forme concave (figure 17), et une seconde configuration, dite de travail, pour laquelle par retournement sous l'action du poussoir 51 il prend une forme convexe pour venir en contact avec le plot central 55. Cette position est instable et le commutateur revient à sa première position lorsque le bouton n'est plus sollicité par l'usager.

Ces interrupteurs 50 à déclic miniaturisés du commerce sont économiques et peu encombrants axialement. Ils sont fixés grâce à leur cage 52 par soudage sur la carte 25 (figure 2) en étant reliés aux pistes électriques de ladite carte pour alimentation de leurs contacts électriques 54,57,55.

Bien entendu, on peut utiliser toute autre forme d'interrupteur à déclic. Par exemple le disque 56 peut avoir une forme ondulée comme décrit dans le document EP-A-0 418 605, les contacts 54,57 étant agencés en conséquence. On peut utiliser un interrupteur à membrane bombée et fixé sur un socle isolant comme décrit dans le document EP-A-0 405 079, sachant que cet interrupteur à faible course est propre à coopérer avec l'élément 4, en sorte de rallonger la course du bouton 3.

Grâce à l'invention, alors qu'un interrupteur du type de la figure 21 a une course initiale de 0,6mm entre les deux positions de son élément à déclic 56, grâce à l'élément 4, il est possible de rallonger la course du bouton et d'obtenir une surcourse, la course totale étant de l'ordre de 2mm.

Le bouton 3 est, grâce à son rebord 32 et aux protubérances 37, guidé par les nervures axiales 62, en forme de quadrillage, lors de son mouvement en translation.

On appréciera que le réseau de nervures axiales 62 constitue une pluralité de guides tubulaires à section rectangulaire à l'intérieur de chacun desquels est monté à translation un bouton. Ce guide tubulaire opaque prend appui sur le conduit 7 avec interposition du masque 6, en sorte qu'il guide la lumière en direction de la vignette correspondante du bouton concerné.

Ce conduit de lumière 7 présente, en regard des zones d'affichages 20,21, des portions décalées axialement 70 en direction de la carte 25 à la faveur de parties inclinées 75 (figure 4). Les portions 70, avec leurs parties inclinées 75 associées, ont globalement en section la forme d'un V avec une partie centrale 72 en forme de dôme, tourné vers la paroi 67, pour logement de deux ampoules d'éclairage 22 par zones d'affichage 20,21.

Au niveau des extrémités des zones d'affichage et des extrémités libres des parties 76 s'étendent verticalement. En coupe verticale, le conduit 7 a en section la forme d'un H avec ses branches axiales 76 perpendiculaires à la paroi 67 (figure 3).

Le conduit 7 est donc moins large que la vitre 5 et l'afficheur 20,21.

Les ampoules 22 sont portées par la carte 25 en étant alimentées à partir de celle-ci. On notera que le conduit de lumière 7 présente également, au niveau de ses portions 70, des pieds pour appui sur la carte 25.

Le conduit 7, plus épais que la carte 25, permet le montage d'éléments 23 d'orientation axiale. Ces éléments 23 constituent des entretoises élastiques entre la carte 25 et l'afficheur 20,21 et permettent l'alimentation électrique destins afficheurs. Chaque afficheur 20,21 est à cristaux liquide, tandis que les éléments 23 sont à base de caoutchouc conducteur permettant d'alimenter électriquement l'afficheur 20,21 concerné.

Le tableau de commande comporte quatre éléments 23 à savoir deux par afficheurs 20,21, les éléments 23 s'étendant le long des faces longitudinales du boîtier 2 (figure 4), à raison de deux par face, le masque 6 présentant pour ce faire des encoches 69. Les éléments 23 sont donc confinés dans un espace délimité par une face longitudinale du boîtier 2, les branches 76 du conduit de lumière 7, la carte 25 et l'afficheur 20,21 à extrémités épaulées à cet effet. Cet afficheur est recouvert par la vitre 5, qui le protège, les éléments 23 étant montés sous précontrainte grâce aux vis de fixation 28.

La vitre 5 est en contact avec la paroi 67 sous la sollicitation des éléments 23 agissant sur l'afficheur 20, lequel agit sur la vitre 5 à section en forme de U.

On notera que la paroi 67 est bien entendu dotée d'ouvertures en regard de la vitre 5 et que les nervures 62 servent également au guidage et au maintien de la vitre 5 et de l'afficheur 20,21.

Le montage du boîtier 2 s'effectue dans une unité de production par enfilage axial favorisé par les nervures 65 à partir de la face arrière du boîtier 2.

Le boîtier-carte peut être assemblé dans une autre unité de fabrication et être monté en final sur le véhicule.

On appréciera que grâce à l'invention, on obtient un tableau de commande du type modulaire avec des boutons 3 des éléments 4 et des interrupteurs 50 standardisés, le tout permettant une commande par impulsions de l'installation de climatisation.

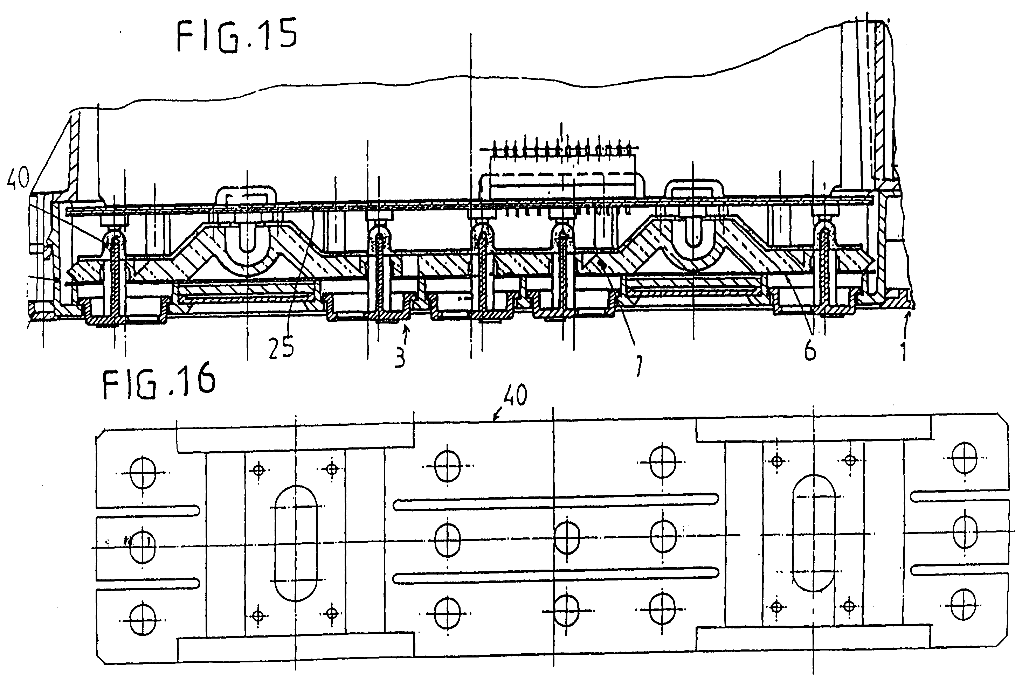

Bien entendu la face de la carte 25 tournée vers le conduit 7 est de couleur blanche et la présente invention n'est pas limitée à l'exemple de réalisation représenté mais englobe toute variante. En particulier les éléments élastiques, au lieu d'être distincts les uns des autres comme dans les figures précédentes, peuvent (figures 15 et 16) appartenir à une pièce unique en forme de membrane élastique 40 dotée de tétines venant se monter sur les tétons 33 des tiges 31.

Dans ce cas la membrane épouse la forme du conduit de lumière 7 dont les angles sont calculés pour réfléchir la lumière. Dans tous les cas, ce conduit 7 permet l'éclairage des vignettes des boutons 3 grâce notamment à la forme des trous du masque 6.

Le tableau de bord est donc de réalisation simple et économique, tout en ayant une forme esthétique et permettant une bonne visibilité des boutons 3 et un bon repérage de ceux-ci notamment la nuit grâce aux lampes d'éclairage 22 en nombre limité et au conduit 7.

## Revendications

1. Tableau de commande à touches, en particulier pour la commande d'une installation de climatisation de l'habitacle d'un véhicule automobile, comportant un boîtier clavier (2) avec une paroi avant (67) dotée d'ouvertures (61) délimitant des épaulements (66) au niveau de la face arrière de ladite paroi (67), des boutons (3) guidés par ledit boîtier en étant déplaçables entre deux positions, l'une stable de repos, l'autre de travail, des commutateurs (50), du type électrique à déclic et à faible course, propres à être actionnés par les boutons (3) pour la commande de fonctions prédéterminées et, pour rallongement de la course des boutons (3), des éléments en matière élastique (4) interposés axialement sous précontrainte entre des tiges (31) d'orientation axiale, que présentent lesdits boutons (3), et les commutateurs (50), lesdits éléments élastiques (4) sollicitant constamment des têtes (34), que présentent lesdits boutons (3), vers les épaulements (66) du boîtier clavier (2) pour définition de la position stable de repos des boutons (3), dans lequel lesdites tiges (31) portent les éléments en matière élastique (4) et s'érigent à partir des têtes (34) des boutons (3), caractérisé en ce que les tiges (31) sont solidaires des têtes (34) des boutons, en ce que chaque tige (31) présente une extrémité libre (33) de taille réduite délimitée par un épaulement (38), en ce que les éléments en matière élastique (4) , tels que de l'élastomère, sont enfilés sur l'extrémité libre (33) de taille réduite des tiges (31) et présentent chacun un trou borgne (41) à cet effet.

2. Tableau de commande selon la revendication 1, caractérisé en ce que les éléments en matière élastique (4) sont distincts les uns des autres.

3. Tableau de commande selon la revendication 1, caractérisé en ce que les éléments en matière élastique (4) appartiennent à une membrane élastique commune (40).

4. Tableau de commande selon l'une quelconque des revendications 1 à 3, caractérisé en ce que les éléments en matière élastique (4,40), portés par les tiges (31) des boutons (3), sont montés sous précontrainte entre lesdits épaulements (38) des tiges (31) et lesdits commutateurs (50) pour la position de repos du bouton (3).

5. Tableau de commande selon la revendication 4, caractérisé en ce que ledit élément en matière élastique (4) est monté sans jeu entre ledit épaulement (38) et ledit commutateur (50) et avec jeu par rapport à ladite extrémité libre (33) de la tige (31).

6. Tableau de commande selon la revendication 5, caractérisé en ce qu'un jeu existe entre le fond du trou borgne (41) de l'élément en matière élastique (4) et l'extrémité libre (33) de la tige (31).

7. Tableau de commande selon l'une quelconque des revendications 1 à 6, caractérisé en ce que ladite extrémité libre est en forme de téton (33) délimité par deux méplats et deux portions circulaires, ladite tige (31) ayant en section dans sa partie courante une forme de croix, et en ce que l'élément en matière élastique (4) coiffe à serrage ledit téton (33) en étant immobilisé en rotation par coopération de formes avec celui-ci, ledit trou borgne (41) ayant une forme complémentaire à celle du téton (33).

8. Tableau de commande selon l'une quelconque des revendications précédentes, caractérisé en ce que le boîtier clavier (2) présente un réseau de nervures quadrangulaires (62) s'étendant axialement à compter de la paroi avant (67), en direction de la face arrière dudit boîtier (2) pour guidage des boutons (3) mobiles en translation.

9. Tableau de commande selon la revendication 8, caractérisé en ce que le bouton (3) présente une tête (34) avec un rebord (32) formant un épaulement, ledit rebord présentant des protubérances (37) effilées pour contact local avec lesdites nervures (62), en ce que ledit rebord (32) est propre à venir en contact avec l'un desdits épaulements (66) et en ce que l'axe de symétrie (93) de la tige (31) est décalé axialement par rapport à l'axe de symétrie axial du bouton (3).

10. Tableau de commande selon l'une quelconque des revendications 4 à 9, caractérisé en ce que lesdites tiges (31) traversent un conduit de lumière (7) en étant guidées par des passages (74) de celui-ci, et en ce que les éléments en matière élastique (4) sont interposés axialement entre le conduit de lumière (7) et une carte (25) portant lesdits commutateurs (50).

11. Tableau de commande selon les revendications 10 et 11, caractérisé en ce que la tête (34) du bouton (3) présente une fenêtre (35) pour montage d'une vignette et éclairage du bouton (3) à partir du conduit de lumière (7).

## Claims

1. A touch-type keypad, in particular for the control of an air conditioning installation for the cabin of a motor vehicle, comprising a keyboard housing (2) with a front wall (67) having apertures (61) defining shoulders (66) in the region of the rear face of the said wall (67), buttons (3) guided by the said housing and displaceable between two positions, one of which is a stable rest position, the other being a working position, short travel switches (50), of the electrical ratchet type, which are adapted to be actuated by the buttons (3) for controlling predetermined functions, and, for lengthening the course of travel of the buttons (3), and elements (4) of resilient material interposed axially under precompression between axially orientated rod elements (31) of the said buttons (3) and the switches (50), with the said resilient elements (4) constantly biassing the heads (34) of the said buttons (3) towards the shoulders (66) of the keyboard housing (2) so as to define the stable rest position of the buttons (3), wherein the said rod elements (31) carry the elements (4) of resilient material and project from the heads (34) of the buttons (3), characterised in that the rod elements (31) are fixed to the heads (34) of the buttons, in that each rod element (31) has a free end portion (33) of reduced size defined by a shoulder (38), in that the elements (4), which are of resilient material such as elastomer, are fitted over the free end portion (33), which is of reduced size, of the rod elements (31), with each said resilient element having for this purpose a blind hole (41).

2. A keypad according to Claim 1, characterised in that the elements (4) of resilient material are separate from each other.

3. A keypad according to Claim 1, characterised in that the elements (4) of resilient material are part of a common elastic membrane (40).

4. A keypad according to any one of Claims 1 to 3, characterised in that the elements (4, 40) of resilient material, carried by the rod elements (31) of the buttons (3), are mounted under precompression between the said shoulders (38) of the rod elements (31) and the said switches (50) in the rest position of the button (3).

5. A keypad according to Claim 4, characterised in that the said element (4) of resilient material is mounted without any clearance between the said shoulder (38) and the said switch (50), and with a clearance with respect to the said free end portion (33) of the rod element (31).

6. A keypad according to Claim 5, characterised in that there is a clearance between the base of the blind hole (41) of the element (4) of resilient material and the free end portion (33) of the rod element (31).

7. A keypad according to any one of Claims 1 to 6, characterised in that the said free end portion is in the form of a spigot (33) defined by two flats and two circular portions, with the said rod element (31) having a cruciform cross section in its main part, and in that the element (4) of resilient material grippingly embraces the said spigot (33), being immobilised against rotation by mating cooperation with the latter, the said blind hole (41) having a profile complementary to that of the spigot (33).

8. A keypad according to any one of the preceding Claims, characterised in that the keyboard housing (2) has a network of quadrilateral ribs (62) which extend axially from the front wall (67) towards the rear face of the said housing (2), for guiding the buttons (3) in straight line movement.

9. A keypad according to Claim 8, characterised in that the button (3) has a head (34) with a flange (32) defining a shoulder, the said flange having tapered projecting elements (37) for making local contact with the said ribs (62), in that the said flange (32) is adapted to make contact with one of the said shoulders (66), and in that the axis of symmetry (93) of the rod element (31) is offset axially with respect to the axial axis of symmetry of the button (3).

10. A keypad according to any one of Claims 4 to 9, characterised in that the said rod elements (31) extend through a translucent member (7), and are guided by passages (74) in the latter, and in that the elements (4) of resilient material are interposed axially between the translucent member (7) and a wafer (25) carrying the said switches (50).

11. A keypad according to Claims 10 and 11, characterised in that the head (34) of the button (3) has a window (35) for mounting a symbol therein and for the illumination of the button (3) from the translucent member (7).

## Patentansprüche

1. Bedienungstafel mit Berührungstasten, insbesondere für die Regelung einer Klimatisiereinrichtung eines Fahrzeuginnenraums, umfassend ein Tastenfeldgehäuse (2) mit einer Vorderwand (67), in die Öffnungen (61) eingearbeitet sind, die Schultern (66) an der Rückseite der besagten Wand (67) begrenzen, Druckknöpfe (3), die durch das besagte Gehäuse geführt und zwischen zwei Positionen, einer stabilen Ruheposition und einer Arbeitsposition, verschiebbar sind, Schalter (50) in der Ausführung als elektrische Auslöseschalter mit kurzem Schaltweg, die durch die Druckknöpfe (3) zur Regelung vorgegebener Funktionen betätigt werden können, Elemente aus elastischem Material (4), die axial unter Vorspannung zwischen axial ausgerichteten Schäften (31), die zu den besagten Druckknöpfen (3) gehören, und den Schaltern (50) eingefügt sind, wobei die besagten elastischen Elemente (4) ständig Köpfe (34), die zu den besagten Druckknöpfen (3) gehören, zu den Schultern (66) des Tastenfeldgehäuses (2) beaufschlagen, um die stabile Ruheposition der Druckknöpfe (3) zu definieren, wobei die besagten Schäfte (31) die Elemente aus elastischem Material (4) tragen und sich von den Köpfen (34) der Druckknöpfe (3) aus erstrekken, **dadurch gekennzeichnet**, daß die Schäfte (31) fest mit den Köpfen (34) der Druckknöpfe verbunden sind, daß jeder Schaft (31) ein freies Ende (33) mit geringerer Größe aufweist, das durch eine Schulter (38) begrenzt ist, daß die Elemente aus elastischem Material (4), etwa aus Elastomer, auf das freie Ende (33) mit geringerer Größe der Schäfte (31) aufgesteckt sind und dazu jeweils ein Sackloch (41) aufweisen.

2. Bedienungstafel nach Anspruch 1 , **dadurch gekennzeichnet**, daß die Elemente aus elastischem Material (4) voneinander getrennt sind.

3. Bedienungstafel nach Anspruch 1 , **dadurch gekennzeichnet**, daß die Elemente aus elastischem Material (4) zu einer gemeinsamen elastischen Membran (40) gehören.

4. Bedienungstafel nach einem der Ansprüche 1 bis 3, **dadurch gekennzeichnet**, daß die an den Schäften (31) der Druckknöpfe (3) angebrachten Elemente aus elastischem Material (4, 40) unter Vorspannung zwischen den besagten Schultern (38) der Schäfte (31) und den Schaltern (50) im Hinblick auf die Ruheposition des Druckknopfs (3) eingebaut sind.

5. Bedienungstafel nach Anspruch 4 , **dadurch gekennzeichnet**, daß das besagte Element aus elastischem Material (4) spielfrei zwischen der besagten Schulter (38) und dem besagten Schalter (50) und mit Spiel im Verhältnis zu dem besagten freien Ende (33) des Schafts (31) eingebaut ist.

6. Bedienungstafel nach Anspruch 5 , **dadurch gekennzeichnet**, daß ein Spiel zwischen dem Boden des Sacklochs (41) des Elements aus elastischem Material (4) und dem freien Ende (33) des Schafts (31) besteht.

7. Bedienungstafel nach einem der Ansprüche 1 bis 6, **dadurch gekennzeichnet**, daß das besagte freie Ende (33) als Zapfen (33) ausgebildet ist, der durch zwei Anflachungen und zwei kreisförmige Abschnitte begrenzt wird, wobei der besagte Schaft (31) im Querschnitt seines Hauptteils eine Kreuzform aufweist, und daß das Element aus elastischem Material (4) den besagten Zapfen (33) durch Aufspannung abdeckt, wobei es durch formschlüssiges Zusammenwirken mit diesem gegen Verdrehung gesichert ist, während das Sackloch (41) eine zur Form des Zapfens (33) passende Form aufweist.

8. Bedienungstafel nach einem der vorangehenden Ansprüche , **dadurch gekennzeichnet**, daß das Tastenfeldgehäuse (2) ein Netz von viereckigen Rippen (62) aufweist, die sich axial von der Vorderwand (67) aus in Richtung der Rückseite des besagten Gehäuses (2) erstrecken, um die geradlinig beweglichen Druckknöpfe (3) zu führen.

9. Bedienungstafel nach Anspruch 8 , **dadurch gekennzeichnet**, daß der Druckknopf (3) einen Kopf (34) mit einer Randleiste (32) aufweist, die eine Schulter bildet, wobei die besagte Randleiste konisch verjüngte Ausstülpungen (37) für die örtliche Berührung mit den besagten Rippen (62) aufweist, daß die besagte Randleiste (32) mit einer der besagten Schultern (66) in Berührung kommen kann und daß die Symmetrieachse (93) des Schafts (31) im Verhältnis zur axialen Symmetrieachse des Druckknopfs (3) axial versetzt ist.

10. Bedienungstafel nach einem der Ansprüche 4 bis 9, **dadurch gekennzeichnet**, daß die besagten Schäfte (31) durch einen Lichtkanal (7) hindurchgehen, wobei sie durch darin vorgesehene Durchgänge (74) geführt werden, und daß die Elemente aus elastischem Material (4) axial zwischen dem Lichtkanal (7) und einer Karte (25) eingefügt sind, welche die besagten Schalter (50) trägt.

11. Bedienungstafel nach den Ansprüchen 9 und 10, **dadurch gekennzeichnet**, daß der Kopf (34) des Druckknopfs (3) ein Fenster (35) für das Einsetzen eines Bezeichnungsschilds und die Beleuchtung des Druckknopfs (3) vom Lichtkanal (7) aus aufweist.
